# EUROPEAN PATENT SPECIFICATION

(11) **EP 3 678 305 B1**
(45) Date of publication and mention of the grant of the patent: **01.11.2023**
(21) Application number: 17927386.7
(22) Date of filing: 30.09.2017
(51) Int. Cl.: H04B 10/40, H04B 10/50, H04B 10/588

(54) **OPTICAL DEVICE APPARATUS COMPRISING AN ELECTRO-ABSORPTION MODULATED LASER**
OPTISCHE VORRICHTUNGSEINRICHTUNG MIT EINEM ELEKTROABSORPTIONSMODULIERTEN LASER
APPAREIL DE DISPOSITIF OPTIQUE COMPRENANT UN LASER MODULÉ PAR ÉLECTRO-ABSORPTION

(43) Date of publication of application: 08.07.2020
(73) Proprietor: Huawei Technologies Co., Ltd., Longgang District Shenzhen, Guangdong 518129 (CN)
(72) Inventor: WEN, Yue, Shenzhen Guangdong 518129 (CN); LIN, Huafeng, Shenzhen Guangdong 518129 (CN); XU, Zhiguang, Shenzhen Guangdong 518129 (CN); YANG, Sulin, Shenzhen Guangdong 518129 (CN); WU, Xuming, Shenzhen Guangdong 518129 (CN); GAO, Jianhe, Shenzhen Guangdong 518129 (CN)
(74) Representative: Thun, Clemens
(86) International application number: PCT/CN2017/105164
(87) International publication number: WO 2019/061544

(56) References cited:
- CN-A- 101 702 489
- CN-A- 102 761 366
- CN-A- 103 650 388
- CN-A- 105 099 557
- CN-A- 106 059 673
- CN-A- 106 253 975
- CN-A- 106 253 975
- US-A1- 2006 221 427
- US-A1- 2012 301 151
- US-A1- 2012 301 151

## Description

### TECHNICAL FIELD

This application relates to the field of optical signal modulation technologies, and in particular, to an optical component apparatus comprising an electro-absorption modulated laser.

### BACKGROUND

Currently, an optical assembly includes a laser, a laser driver, and a matching network, and the matching network includes a resistor and an inductor. Specifically, before the optical assembly is delivered from a factory, a manufacturer of the optical assembly adjusts a bias current of the laser, an amplitude for modulating a voltage signal, the inductor and the resistor in the matching network, and the like, so that a transmit power, an extinction ratio, and eye pattern performance of the laser can meet standard requirements. However, power consumption of an existing optical assembly is relatively high, and higher power consumption of the optical assembly indicates severe impact on performance of the optical assembly.

The document US 2006/0221427 A1 shows an impedance matching circuit for an optical transmitter.

The document CN 106253975 A shows an optical transmission apparatus controlling a number of parameters of the eye-diagram of the output signal.

The document US 2012/0301151 A1 shows a low power consumption, long range, plugable transceiver according circuits and devices therefor and methods of using the same. Especially, measuring a temperature of the laser, and adjusting the input signal accordingly, is shown.

### SUMMARY

The present invention is defined by the independent claim. Embodiments labelled as inventive embodiments in the following, which are not covered by the scope of protection defined by the independent claims, are to be understood as examples helpful for understanding the invention, but not as embodiments of the invention.

According to a first aspect, an embodiment of this application provides an optical component apparatus, including:
a board, where at least one driver unit is disposed on the board, and the driver unit includes: a laser driver, and a matching network and a first connecting piece that are connected to an output end of the laser driver;
at least one optical assembly, where the optical assembly includes an electro-absorption modulated laser and a second connecting piece that is connected to the electro-absorption modulated laser, and the first connecting piece and the second connecting piece are detachably electrically connected, where
the laser driver outputs a modulation signal, the modulation signal is input to the electro-absorption modulated laser through the first connecting piece and the second connecting piece, and the electro-absorption modulated laser outputs a laser signal based on the modulation signal; and
an eye pattern determining chip, where the eye pattern determining chip is configured to adjust impedance of the matching network based on the laser signal output by the electro-absorption modulated laser, until eye pattern performance of the laser signal that is output by the electro-absorption modulated laser meets a preset standard.

According to the optical component apparatus provided in this embodiment of this application, the laser driver is disposed on the board, to reduce a size of the optical assembly, reduce power consumption of the optical assembly, and improve performance of the optical assembly. In addition, according to the optical component apparatus provided in this embodiment of this application, the eye pattern determining chip may be used to automatically adjust, based on the laser signal output by the optical assembly, impedance value of a matching network in a driver unit that is connected to the optical assembly, so that an eye pattern curve of an optical signal that is output by the optical assembly meets the preset standard.

In an implementation, the first connecting piece is a card connector, and the second connecting piece is a plug or an edge connector, or the first connecting piece is a plug or an edge connector, and the second connecting piece is a card connector.

In an implementation, the eye pattern determining chip is integrated on the board, one eye pattern determining chip is correspondingly integrated into each driver unit, an input end of the eye pattern determining chip is connected to the second connecting piece by using the first connecting piece, and an output end of the eye pattern determining chip is connected to a matching network of a driver unit that corresponds to the eye pattern determining chip.

In an implementation, the optical assembly further includes: an optical splitter, where the optical splitter is configured to split, based on a split ratio of the optical splitter, the laser signal output by the electro-absorption modulated laser into a first optical signal and a second optical signal; a receiver, where the receiver is configured to convert the second optical signal into a current signal; a trans-impedance amplifier, where the trans-impedance amplifier is configured to convert the current signal into a voltage signal, and output the voltage signal to the eye pattern determining chip sequentially through the second connecting piece and the first connecting piece; and an output end, where the first optical signal is output through the output end, so that the eye pattern determining chip is in a one-to-one correspondence with the driver unit, and automatic adjustment of the impedance of the matching network is implemented without any additional manual intervention.

In an implementation, a retractable optical fiber is disposed at an input end of the eye pattern determining chip, and the eye pattern determining chip is connected to a to-be-adjusted optical assembly by using the retractable optical fiber.

In an implementation, an optical fiber flange interface is disposed at an input end of the eye pattern determining chip, and the optical fiber flange interface of the eye pattern determining chip is connected to a to-be-adjusted optical assembly by using an external optical fiber.

In an implementation, the eye pattern determining chip is integrated on the board, one eye pattern determining chip is disposed on each board, and an output end of the eye pattern determining chip is connected to a matching network of each driver unit on the board on which the output end is located, so that a plurality of driver units on the board share one eye pattern determining chip, thereby improving integration of the optical component apparatus, and reducing a volume of the optical component apparatus.

In an implementation, the optical component apparatus further includes a main control board, the eye pattern determining chip is integrated on the main control board, and an output end of the eye pattern determining chip is connected to a matching network of each driver unit on each board on the main control board, so that a plurality of driver units on a plurality of boards share one eye pattern determining chip, thereby improving integration of the optical component apparatus, and reducing a volume of the optical component apparatus.

In an implementation, the eye pattern determining chip is a handheld apparatus, so that the eye pattern determining chip can be independently manufactured and used.

In an implementation, the eye pattern determining chip generates an eye pattern curve based on the laser signal that is output by the electro-absorption modulated laser, and when the eye pattern curve does not meet the preset standard, adjusts the impedance of the matching network, until the eye pattern curve of the laser signal that is output by the electro-absorption modulated laser meets the preset standard.

In an implementation, the eye pattern determining chip adjusts, when the eye pattern curve does not meet the preset standard, the impedance of the matching network to one of a plurality of preset impedance values in sequence, until the eye pattern curve of the laser signal that is output by the electro-absorption modulated laser meets the preset standard.

According to a second aspect, an embodiment of this application provides an optical assembly. The optical assembly includes an electro-absorption modulated laser and a second connecting piece that is connected to the electro-absorption modulated laser, and the second connecting piece is configured to detachably electrically connect to an external assembly; the electro-absorption modulated laser outputs a laser signal based on a modulation signal that is output by the external assembly; and
the optical assembly further includes:
an optical splitter, where the optical splitter is configured to split, based on a split ratio of the optical splitter, the laser signal output by the electro-absorption modulated laser into a first optical signal and a second optical signal;
a receiver, where the receiver is configured to convert the second optical signal into a current signal;
a trans-impedance amplifier, where the trans-impedance amplifier is configured to convert the current signal into a voltage signal, and output the voltage signal to the external assembly sequentially through the first connecting piece and the second connecting piece; and
an output end, where the first optical signal is output through the output end.

The optical assembly provided in this embodiment of this application does not include a laser driver, so that a size of the optical assembly can be reduced, power consumption of the optical assembly can be reduced, and performance of the optical assembly can be improved. In addition, the optical assembly provided in this embodiment of this application includes the optical splitter, the receiver, and the trans-impedance amplifier, so that the second optical signal can be split from the laser signal output by the electro-absorption modulated laser. And the second optical signal is converted by the receiver and the trans-impedance amplifier and is output to the external assembly, so that an eye pattern determining chip in the external assembly adjusts, based on the second optical signal, impedance of a matching network in a driver unit that is in the external assembly and that corresponds to the optical assembly. Therefore, the impedance of the matching network in the driver unit that corresponds to the optical assembly matches the optical assembly, and further, an eye pattern curve of the first optical signal that is output by the optical assembly meets a preset standard.

According to a third aspect, an embodiment of this application provides an optical component. The optical component includes:
a board, where at least one driver unit is disposed on the board, and the driver unit includes: a laser driver, and a matching network and a first connecting piece that are connected to an output end of the laser driver; and the first connecting piece is configured to detachably electrically connect to an external assembly, where
the laser driver outputs a modulation signal, and the modulation signal is output to the external assembly through the first connecting piece; and
an eye pattern determining chip, where an output end of the eye pattern determining chip is connected to the matching network, an input end of the eye pattern determining chip is connected to the external assembly, and the eye pattern determining chip receives a laser signal fed back by the external assembly based on the modulation signal, and adjusts impedance of the matching network based on the laser signal, until eye pattern performance of the laser signal that is fed back by the external assembly meets a preset standard.

According to the optical component provided in this embodiment of this application, the laser driver and the matching network are disposed on the board, so that when the optical assembly is connected, the laser driver and the matching network may not be disposed in the optical assembly, thereby reducing a size of the optical assembly, reducing power consumption of the optical assembly, and improving performance of the optical assembly. In addition, according to the optical component provided in this embodiment of this application, the eye pattern determining chip may be used to automatically adjust, based on the laser signal output by the optical assembly, impedance value of a matching network in a driver unit that is connected to the optical assembly, so that an eye pattern curve of an optical signal that is output by the optical assembly meets the preset standard.

According to a fourth aspect, an embodiment of this application provides an optical line terminal. The optical line terminal includes the optical assembly and the optical component, or the optical line terminal includes the optical component apparatus provided in any one of the foregoing embodiments.

According to the optical line terminal and an optical network system provided in this embodiment of this application, the laser driver and the matching network are disposed on the board, to reduce a size of the optical assembly, reduce power consumption of the optical assembly, and improve performance of the optical assembly. In addition, according to the optical line terminal and the optical network system provided in this embodiment of this application, an eye pattern determining chip may be used to automatically adjust, based on a laser signal output by the optical assembly, impedance value of a matching network in a driver unit that is connected to the optical assembly, so that an eye pattern curve of an optical signal that is output by the optical assembly meets a preset standard.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show some embodiments of this application, and a person of ordinary skill in the art may still derive other drawings from these accompanying drawings without creative efforts.
FIG. 1 is a schematic structural diagram of an optical component apparatus according to an embodiment of this application;
FIG. 2 is a schematic structural diagram of an optical component apparatus according to another embodiment of this application;
FIG. 3 is a schematic structural diagram of an optical component apparatus according to still another embodiment of this application;
FIG. 4 is a schematic structural diagram of an optical assembly in an optical component apparatus according to an embodiment of this application;
FIG. 5 is a schematic structural diagram of a packaged optical assembly in an optical component apparatus according to an embodiment of this application;
FIG. 6 is a schematic structural diagram of an optical component apparatus according to yet another embodiment of this application;
FIG. 7 is a schematic structural diagram of an eye pattern determining chip in an optical component apparatus according to an embodiment of this application;
FIG. 8 is a schematic structural diagram of an eye pattern determining chip in an optical component apparatus according to another embodiment of this application;
FIG. 9 is a schematic structural diagram of an optical component apparatus according to yet another embodiment of this application;
FIG. 10 is a schematic structural diagram of an optical component apparatus according to still another embodiment of this application;
FIG. 11 is a schematic structural diagram of an optical component apparatus according to yet another embodiment of this application;
FIG. 12 is a schematic structural diagram of an optical assembly according to an embodiment of this application; and
FIG. 13 is a schematic structural diagram of an optical component according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

In the following descriptions, many specific details are described to facilitate full understanding of this application. However, this application may alternatively be implemented in another manner different from that described herein, and a person skilled in the art may make similar promotion without violating a connotation of this application. Therefore, this application is not limited to the specific embodiments disclosed below.

As described in the background, power consumption of an existing optical assembly is relatively high, and higher power consumption of the optical assembly indicates severe impact on performance of the optical assembly.

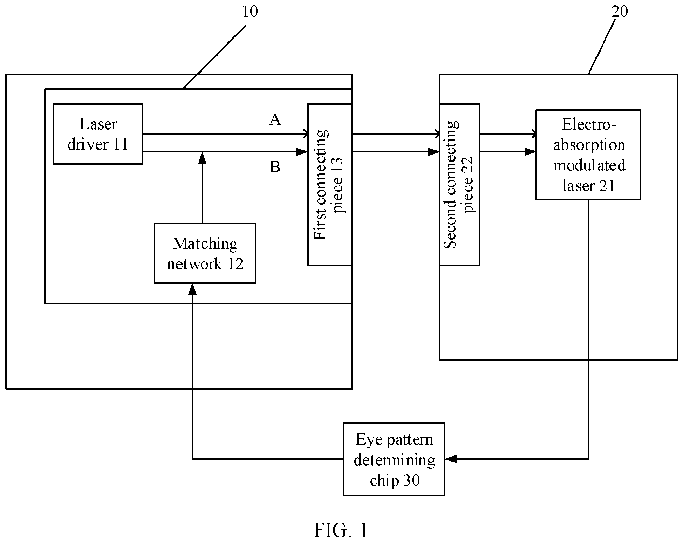

In view of this, an embodiment of this application provides an optical component apparatus. As shown in FIG. 1, the optical component apparatus includes:
a board, where at least one driver unit 10 is disposed on the board, and the driver unit 10 includes: a laser driver 11, and a matching network 12 and a first connecting piece 13 that are connected to an output end of the laser driver 11;
at least one optical assembly 20, where the optical assembly 20 includes an electro-absorption modulated laser 21 and a second connecting piece 22 that is connected to the electro-absorption modulated laser 21, and the first connecting piece 13 and the second connecting piece 22 are detachably electrically connected, where
the laser driver 11 outputs a modulation signal B, the modulation signal B is input to the electro-absorption modulated laser 21 through the first connecting piece 13 and the second connecting piece 22, and the electro-absorption modulated laser 21 outputs a laser signal based on the modulation signal B; and
an eye pattern determining chip 30, where the eye pattern determining chip 30 is configured to adjust impedance of the matching network 12 based on the laser signal output by the electro-absorption modulated laser 21, until eye pattern performance of the laser signal that is output by the electro-absorption modulated laser 21 meets a preset standard. Optionally, the preset standard may be a requirement, in a standard protocol in the field of optical modules, on the laser signal output by the optical module. This is not limited in this application, and is specifically determined based on a case.

It should be noted that, in this embodiment, the laser driver 11 also outputs a drive signal A. The drive signal A is input to the electro-absorption modulated laser 21 through the first connecting piece 13 and the second connecting piece 22, and the electro-absorption modulated laser 21 works driven by the drive signal A.

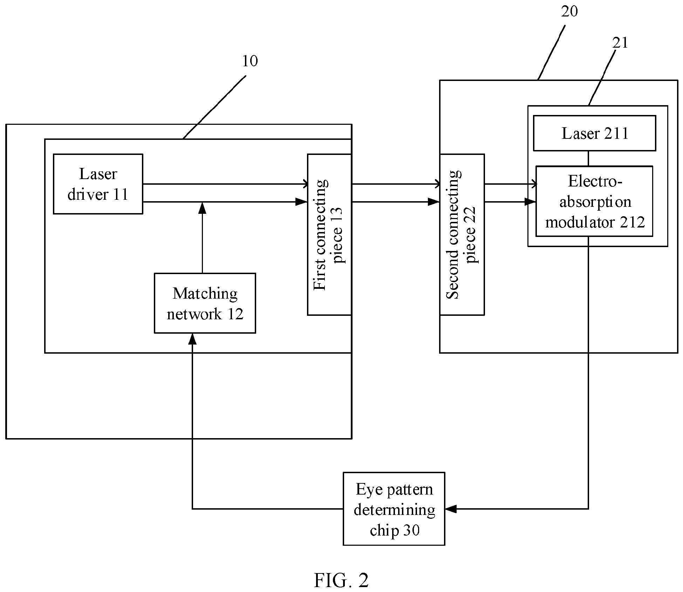

Based on this embodiment, in a specific embodiment of this application, the matching network 12 includes at least one of an adjustable resistor, an adjustable inductor, and an adjustable capacitor. As shown in FIG. 2, the electro-absorption modulated laser 21 includes a laser 211 and an electro-absorption modulator 212 that is connected to the laser 211. The electro-absorption modulator 212 modulates, under control of the modulation signal B that is output from the board, a laser signal generated by the laser 211, and then outputs the laser signal.

Because a larger size of the optical assembly 20 indicates higher power consumption of the optical assembly 20 and severe impact on performance of the optical assembly 20, in the optical component apparatus provided in this embodiment of this application, the laser driver 11 is disposed on the board, to reduce the size of the optical assembly 20, reduce the power consumption of the optical assembly 20, and improve the performance of the optical assembly 20.

It should be noted that in a conventional optical component apparatus, the laser driver, the matching network, and the electro-absorption modulated laser are all disposed on the optical assembly, and the matching network and the optical assembly are in a one-to-one correspondence. Therefore, as long as parameters of the optical assembly are adjusted before delivery, it can be ensured that performance of the optical component apparatus remains unchanged in subsequent work. However, in this embodiment of this application, the matching network and the electro-absorption modulated laser are separately disposed. Even if parameters of the matching network are adjusted before the board is delivered from a factory, when the optical component apparatus is subsequently used, it is difficult to ensure that a matching network of a driver unit on the board is paired with and connected to a corresponding optical assembly, causing a phenomenon that the matching network does not match the optical assembly. However, different optical assemblies have different frequency responses. Therefore, when a matching network of a driver unit on the board that is connected to the optical assembly does not match the optical assembly, eye pattern performance of the optical component apparatus cannot meet the preset standard, and an eye pattern defect exists, affecting the eye pattern performance of the optical component apparatus.

The optical component apparatus provided in this embodiment of this application further includes the eye pattern determining chip 30. The eye pattern determining chip 30 is configured to adjust the impedance of the matching network 12 based on the laser signal output by the electro-absorption modulated laser 21, until the eye pattern performance of the laser signal that is output by the electro-absorption modulated laser 21 meets the preset standard. Therefore, during subsequent working of the optical component apparatus provided in this embodiment of this application, after the optical assembly 20 is connected to the board and before service communication is performed by using the board, the eye pattern determining chip 30 may first be used to adjust, based on the laser signal output by the electro-absorption modulated laser 21, the impedance of the matching network 12 in the driver unit that corresponds to the optical assembly, and then, after the eye pattern performance of the laser signal that is output by the electro-absorption modulated laser 21 meets the preset standard, output the laser signal that is output by the electro-absorption modulated laser 21, so that the matching network 12 in the driver unit in the optical component apparatus matches the optical assembly 20 that is connected to the driver unit.

Based on the foregoing embodiments, in another embodiment of this application, the first connecting piece 13 is a card connector, the second connecting piece 22 is a plug or an edge connector, and the board and the optical assembly 20 are detachably connected to each other by using the plug (or the edge connector) and the card connector. In another embodiment of this application, the first connecting piece 13 is a plug or an edge connector, the second connecting piece 22 is a card connector, and the board and the optical assembly 20 are detachably connected to each other by using the plug (or the edge connector) and the card connector. In other embodiments of this application, the board and the optical assembly 20 may alternatively be detachably connected in another manner. This is not limited in this application, and is specifically determined based on a case.

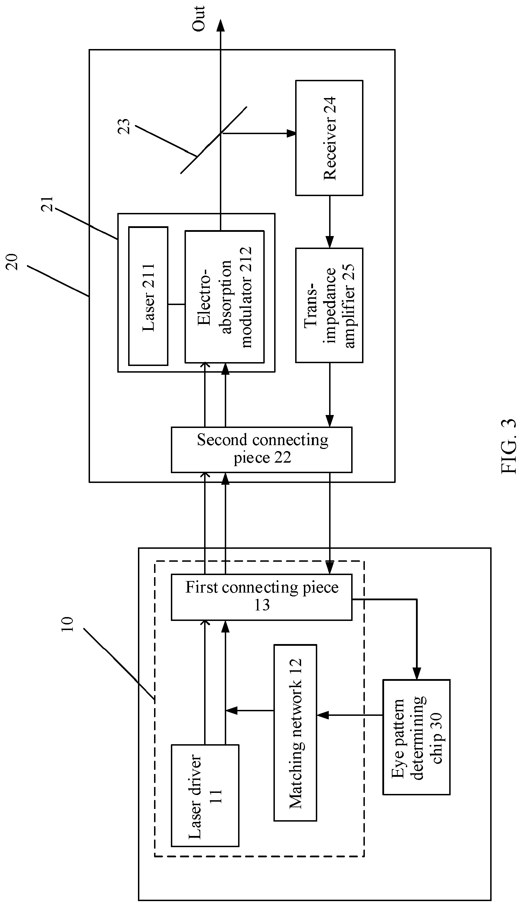

Based on any one of the foregoing embodiments, in an embodiment of this application, as shown in FIG. 3, the eye pattern determining chip 30 is integrated on the board, one eye pattern determining chip 30 is correspondingly integrated into each driver unit 10, and an input end of the eye pattern determining chip 30 is connected to the second connecting piece 22 by using the first connecting piece 13. An output end of the eye pattern determining chip 30 is connected to a matching network of a driver unit that corresponds to the eye pattern determining chip, so that a laser signal output by an electro-absorption modulated laser 21 that is in the optical assembly 20 may be output to the eye pattern determining chip 30 sequentially through the second connecting piece 22 and the first connecting piece 13.

Based on the foregoing embodiments, in an embodiment of this application, as shown in FIG. 3, the optical assembly 20 further includes:
an optical splitter 23, where the optical splitter 23 is configured to split, based on a split ratio of the optical splitter 23, an laser signal output by the electro-absorption modulated laser 21 into a first optical signal and a second optical signal;
a receiver 24, where the receiver 24 is configured to convert the second optical signal into a current signal;
a trans-impedance amplifier 25, where the trans-impedance amplifier 25 is configured to convert the current signal into a voltage signal, and output the voltage signal to the eye pattern determining chip 30 sequentially through the second connecting piece 22 and the first connecting piece 13; and
an output end Out, where the first optical signal is output through the output end Out.

In this embodiment of this application, when the optical component apparatus works, the optical splitter 23 is first used to split the laser signal output by the electro-absorption modulated laser 21 into the first optical signal and the second optical signal. Then the receiver 24 and the trans-impedance amplifier 25 are used to convert the second optical signal into the voltage signal and output the voltage signal to the eye pattern determining chip 30, so that the eye pattern determining chip 30 adjusts impedance of the matching network 12 based on the second optical signal, and outputs the first optical signal by using the output end Out after eye pattern performance of the second optical signal meets a preset standard.

Based on the foregoing embodiments, in a specific embodiment of this application, the split ratio is 5:95, that is, the second optical signal accounts for 5% of the laser signals that are output by the electro-absorption modulated laser 21, to ensure that when the optical component works, most of the laser signals output by the electro-absorption modulated laser 21 may be output through the output end Out of the optical assembly 20.

It should be noted that, because the percentage of the second optical signal to the laser signals output by the electro-absorption modulated laser 21 is relatively small, to ensure that the second optical signal can be quickly identified by the eye pattern determining chip 30, and obtain, based on the voltage signal obtained after conversion of the second optical signal, an eye pattern curve of the laser signal that is output by the electro-absorption modulated laser 21, in an embodiment of this application, after converting the current signal into the voltage signal, the trans-impedance amplifier 25 further has a function of amplifying the voltage signal. However, this is not limited in this application, and is specifically determined based on a case.

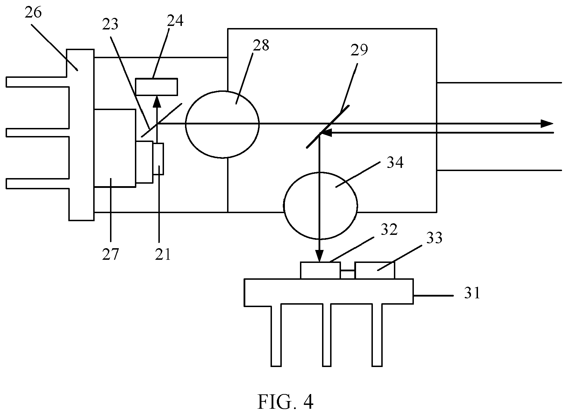

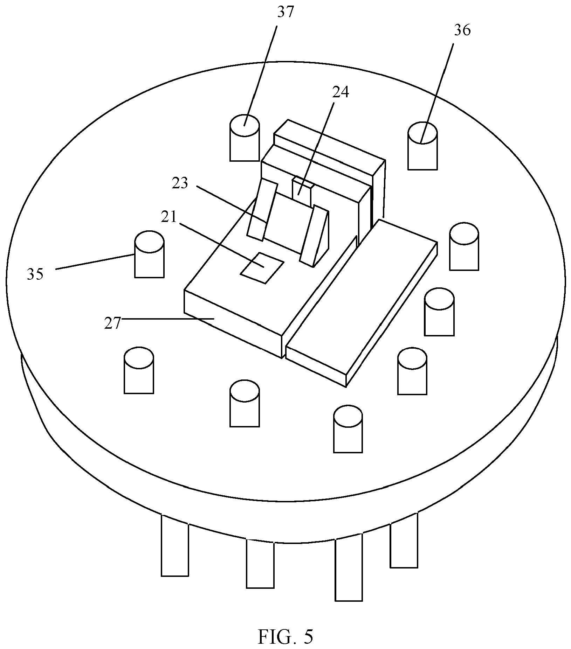

Specifically, FIG. 4 is a schematic structural diagram of the optical assembly 20 according to an embodiment of this application, and FIG. 5 is a three-dimensional schematic structural diagram of the optical assembly 20. In this embodiment of this application, the optical assembly 20 includes:
a first base 26;
a thermoelectric cooler 27 (TEC) fixed on the first base 26 and an electro-absorption modulated laser 21 fixed on the thermoelectric cooler 27, where the thermoelectric cooler 27 is configured to adjust an operating temperature of the electro-absorption modulated laser 21;
an optical splitter 23, where the optical splitter 23 is configured to split, based on a split ratio of the optical splitter 23, a laser signal output by the electro-absorption modulated laser 21 into a first optical signal and a second optical signal;
a receiver 24, where the receiver 24 is configured to convert the second optical signal into a current signal;
a trans-impedance amplifier (not shown), where the trans-impedance amplifier is configured to convert the current signal into a voltage signal, and output the voltage signal to the eye pattern determining chip sequentially through the second connecting piece and the first connecting piece;
a first lens 28 and a filter 29 that are located in an optical path of the first optical signal, where the first optical signal is transmitted by the first lens 28 and projected by the filter 29 in sequence, and then is output from the optical assembly 20;
a second base 31;
another receiver 32 and another trans-impedance amplifier 33 that are fixed on the second base 31; and
a second lens 34 located between a reflective surface of the filter 29 and the another receiver 32, where an external optical signal that is incident into the optical assembly 20 is reflected by the filter 29, and is transmitted to the another receiver 32 by using the second lens 34 after the optical signal is. The optical signal is converted into a current signal after the optical signal is received by the another receiver 32, and the current signal is output by using the another trans-impedance amplifier 34.

As shown in FIG. 5, in addition to the thermoelectric cooler 27, a thermoelectric cooler pin (not shown), the electro-absorption modulated laser 21, a bias current pin 35 that provides a drive signal for a laser in the electro-absorption modulated laser 21, and the optical splitter 23, the optical component apparatus provided in this embodiment of this application further includes a receiver 24, a bias voltage pin 36 that provides bias voltage for the receiver 24, an output signal pin 37 of the receiver 24, and the like. This is not limited in the present invention, and is specifically determined based on a case. Based on the foregoing embodiments, in an embodiment of this application, the optical assembly 20 further includes a heat sensitive sensor (not shown), and the heat sensitive sensor is configured to sense the operating temperature of the electro-absorption modulated laser 21.

Based on any one of the foregoing embodiments, in an embodiment of this application, the eye pattern determining chip 30 is specifically configured to: generate an eye pattern curve based on the laser signal that is output by the electro-absorption modulated laser 21, determine whether the eye pattern curve meets the preset standard, and adjust the impedance of the matching network 12 when the eye pattern curve does not meet the preset standard, until the eye pattern curve of the electro-absorption modulated laser 21 meets the preset standard. It should be noted that, in this embodiment of this application, whether the eye pattern curve has a defect refers to that whether the eye pattern curve meets the preset standard. When the eye pattern curve meets the preset standard, the eye pattern curve does not have an eye pattern defect, and when the eye pattern curve does not meet the preset standard, the eye pattern curve has an eye pattern defect.

Specifically, in an embodiment of this application, the eye pattern determining chip first converts a voltage signal output by the trans-impedance amplifier into a digital signal, samples a point from the data signal, generates the eye pattern curve, and then compares the eye pattern curve with an eye pattern template in a standard protocol. When the eye pattern curve can be placed in the eye pattern template, the eye pattern curve meets the preset standard, and there is no eye pattern defect. When the eye pattern curve cannot be placed in the eye pattern template, the eye pattern curve does not meet the preset standard, and there is an eye pattern defect. Optionally, in an embodiment of this application, the eye pattern template includes an eye image and a block that is located in the eye image. Specifically, when the eye pattern curve is compared with the eye pattern template, it is determined whether the eye pattern curve can be placed in the block. However, this is not limited in the present invention. In another embodiment of the present invention, the block in the eye image may be alternatively replaced with another shape, and is specifically determined based on a case.

Based on the foregoing embodiments, in an embodiment of this application, the eye pattern determining chip 30 adjusts, when the eye pattern curve does not meet the preset standard, the impedance of the matching network 12 to one of a plurality of preset impedance values in sequence, until the eye pattern curve of the laser signal that is output by the electro-absorption modulated laser 21 meets the preset standard and no eye pattern defect exists.

For example, in an embodiment of this application, the matching network 12 includes an adjustable resistor, an adjustable inductor, and an adjustable capacitor, where the adjustable resistor includes 20 resistors, a resistance value of each resistor is 10 ohms. The adjustable capacitor includes 10 capacitors, and a capacitance value of each capacitor is 0.2 nF. The adjustable inductor includes 10 inductors, an inductance value of each inductor is 0.1 nH. The matching network 12 includes a plurality of switches, and a quantity of the switches is the same as a quantity of combinations of the resistor, the capacitor, and the inductor in the matching network 12, so that one switch corresponds to one impedance value, that is, the matching network 12 has a plurality of preset impedance values. Each impedance value corresponds to a combination of the inductor, the resistor, and the capacitor in the matching network 12. For example, a combination corresponding to the 1124th switch is a 20-ohm resistor, a 1-nH inductor, and a 2-pF capacitor. During specific adjustment, when the eye pattern curve does not meet the preset standard, the eye pattern determining chip 30 adjusts, based on the eye pattern curve, the impedance of the matching network 12 to be one of a plurality of preset impedance values in sequence, until a switch is selected, so that the eye pattern curve of the laser signal that is output by the electro-absorption modulated laser 21 meets the preset standard and no eye pattern defect exists.

Optionally, in an embodiment of this application, when the eye pattern curve does not meet the preset standard, the eye pattern determining chip 30 adjusts, based on the eye pattern curve, the impedance of the matching network 12 to be one of a plurality of preset impedance values in sequence, until a switch is selected, so that the eye pattern curve of the laser signal that is output by the electro-absorption modulated laser 21 meets the preset standard and no eye pattern defect exists. The impedance of the matching network 12 may be adjusted to be one of the plurality of preset impedance values in an ascending order of impedance values of the matching network, until a switch is selected, so that the eye pattern curve of the laser signal that is output by the electro-absorption modulated laser 21 meets the preset standard. The impedance of the matching network 12 may also be adjusted to be one of the plurality of preset impedance values in descending order of the impedance values of the matching network, until a switch is selected, so that the eye pattern curve of the laser signal that is output by the electro-absorption modulated laser 21 meets the preset standard. This is not limited in this application, and is specifically determined based on a case.

It should be noted that, based on the foregoing embodiments, in an optional embodiment of this application, the adjustable resistor, the adjustable inductor, and the adjustable capacitor are integrated on one chip, to improve integration of the board and reduce a size of the board.

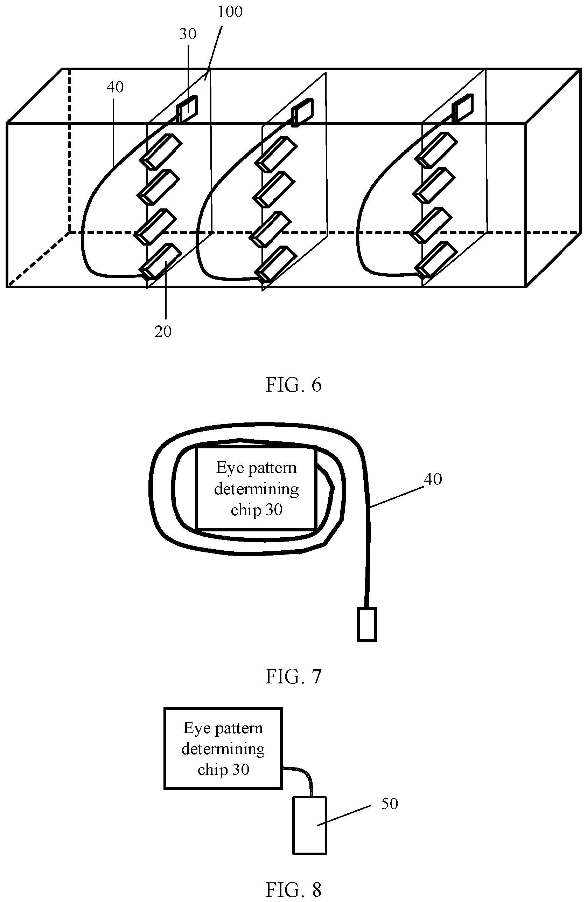

In another embodiment of this application, as shown in FIG. 6, the eye pattern determining chip 30 is integrated on a board 100, one eye pattern determining chip 30 is disposed on each board 100, and an output end of the eye pattern determining chip 30 is connected to a matching network of each driver unit on the board on which the output end is located. In this embodiment of this application, when the board 100 has a plurality of driver units, the board 100 is connected to a plurality of optical assemblies 20. Before service communication of the board 100 is performed, the eye pattern determining chip 30 sequentially adjusts a matching network of a driver unit that corresponds to each optical assembly 20. Therefore, a plurality of driver units on a same board 100 share one eye pattern determining chip 30, and a size of the board 100 is reduced.

Specifically, in an embodiment of this application, an electrical switch is disposed on each connection path between the output end of the eye pattern determining chip 30 and the matching network that is of each driver unit and that is connected to the output end. When the optical component works, the optical component starts the driver unit after connecting the optical assembly to the driver unit that corresponds to the optical assembly, controls the driver unit to provide a drive signal and a modulation signal for the optical assembly, controls conduction of the electrical switch between the eye pattern determining chip and the driver unit, and adjusts the matching network in the driver unit that corresponds to the optical assembly. It should be noted that the electrical switch between the eye pattern determining chip and the matching network that is of each driver unit and that is connected to the eye pattern determining chip may be controlled by using an external element, or may be controlled by using the board. This is not limited in this application, and is specifically determined based on a case.

Based on the foregoing embodiments, in an embodiment of this application, as shown in FIG. 7, a retractable optical fiber 40 is disposed at an input end of the eye pattern determining chip 30. The eye pattern determining chip 30 is sequentially connected to a to-be-adjusted optical assembly 20 by using the retractable optical fiber 40, and adjusts impedance of a matching network in a driver unit that corresponds to each to-be-adjusted optical assembly 20, so that an eye pattern curve of a laser signal that is output by each optical assembly 20 meets a preset standard.

In another embodiment of this application, as shown in FIG. 8, an optical fiber flange interface 50 is disposed at an input end of the eye pattern determining chip 30, and the optical fiber flange interface 50 of the eye pattern determining chip 30 is connected to a to-be-adjusted optical assembly 20 by using an external optical fiber. In other words, during specific working, the optical fiber flange interface 50 of the eye pattern determining chip 30 is sequentially connected to the to-be-adjusted optical assembly 20 and the driver unit that corresponds to the to-be-adjusted optical assembly 20 by using the external optical fiber, to adjust impedance of a matching network in a driver unit that corresponds to each to-be-adjusted optical assembly 20, so that an eye pattern curve of a laser signal that is output by each optical assembly 20 meets a preset standard.

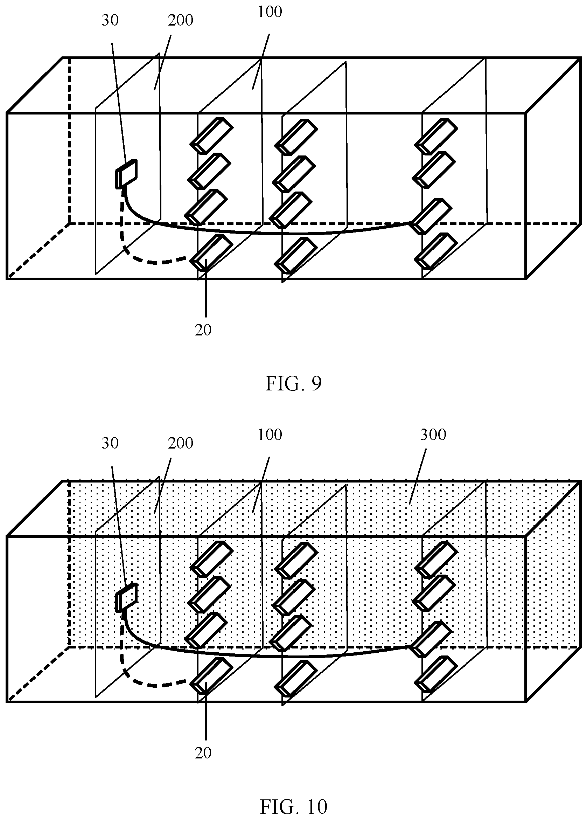

In still another embodiment of this application, as shown in FIG. 9, the optical component apparatus further includes a main control board 200. The main control board 200 is configured to provide a software loading program for working of the board 100, and control the board 100 to work. It should be noted that, when the optical component apparatus includes a plurality of boards 100, the plurality of boards 100 share one main control board 200, and the main control board 200 is configured to provide the software loading program for working of each board 100, and control each board 100 to work.

Based on the foregoing embodiments, in an embodiment of this application, the eye pattern determining chip 30 is integrated on the main control board 200, one main control board 200 corresponds to one eye pattern determining chip 30. An output end of the eye pattern determining chip is connected to a matching network of each driver unit on each board that is on the main control board. During specific working, before service communication of the board 100 is performed, the eye pattern determining chip 30 sequentially determines impedance of a matching network of each driver unit on each board 100, so that an eye pattern curve of a laser signal that is output by an optical assembly 20 that corresponds to each driver unit meets a preset standard.

Specifically, in an embodiment of this application, an electrical switch is disposed on each connection path between the output end of the eye pattern determining chip 30 and the matching network that is of each driver unit and that is connected to the output end. When the optical component works, the optical component starts the driver unit after connecting the optical assembly to the driver unit that corresponds to the optical assembly, controls the driver unit to provide a drive signal and a modulation signal for the optical assembly, controls conduction of the electrical switch between the eye pattern determining chip and the driver unit, and adjusts the matching network in the driver unit that corresponds to the optical assembly. Optionally, in an embodiment of this application, the electrical switch between the eye pattern determining chip and the matching network that is of each driver unit and that is connected to the eye pattern determining chip may be controlled by using the main control board. However, this is not limited in this application, and is specifically determined based on a case.

Based on the foregoing embodiments, in an embodiment of this application, a retractable optical fiber is disposed at an input end of the eye pattern determining chip 30. The eye pattern determining chip 30 is sequentially connected to a to-be-adjusted optical assembly 20 corresponding to each driver unit that is in each board by using the retractable optical fiber, and adjusts impedance of a matching network in a driver unit that corresponds to each to-be-adjusted optical assembly 20, so that an eye pattern curve of a laser signal that is output by each optical assembly 20 meets a preset standard.

In another embodiment of this application, an optical fiber flange interface is disposed at an input end of the eye pattern determining chip 30, and the optical fiber flange interface of the eye pattern determining chip 30 is connected to a to-be-adjusted optical assembly 20 corresponding to each driver unit that is in each board 100 by using an external optical fiber. In other words, during specific working, the optical fiber flange interface of the eye pattern determining chip 30 is sequentially connected to the to-be-adjusted optical assembly 20 and the driver unit that corresponds to the to-be-adjusted optical assembly 20 by using the external optical fiber, to adjust impedance of a matching network in a driver unit that corresponds to each to-be-adjusted optical assembly 20, so that an eye pattern curve of a laser signal that is output by each optical assembly 20 meets a preset standard.

It should be noted that, as shown in FIG. 10, when the eye pattern determining chip 30 is integrated on the main control board 200, the optical component apparatus further includes a backplane 300. The backplane 300 is connected to the main control board 200 and each board 100, and provides a drive signal and a control instruction for each board 100. It should be further noted that, in this embodiment of this application, an optical assembly 20 in the optical component apparatus needs to be manually configured. For example, the board 100 has four first connecting pieces, and only one first connecting piece is connected to the optical assembly 20. In this case, a driver unit corresponding to the optical assembly 20 is manually started, and conduction of a connection path between the eye pattern determining chip and the driver unit is controlled, to adjust, based on a laser signal output by the optical assembly 20, a matching network in the driver unit that corresponds to the optical assembly 20. In addition, when the eye pattern determining chip 30 adjusts, based on a laser signal output by the electro-absorption modulated laser 21, matched impedance corresponding to the electro-absorption modulated laser 21, an adjustment instruction of the eye pattern determining chip 30 is sequentially transmitted to the matching network by using cables of the main control board 200, the backplane 300, and the board 100, to adjust the impedance of the matching network 12.

Specifically, based on the foregoing embodiments, in an embodiment of this application, when the matching network is an integrated chip, the integrated chip including the matching network is connected to another component in the optical component apparatus through an I₂C interface. However, this is not limited in this application. In another embodiment of this application, the integrated chip including the matching network may be further connected to the another component in the optical component apparatus through another communications interface. This is specifically determined based on a case.

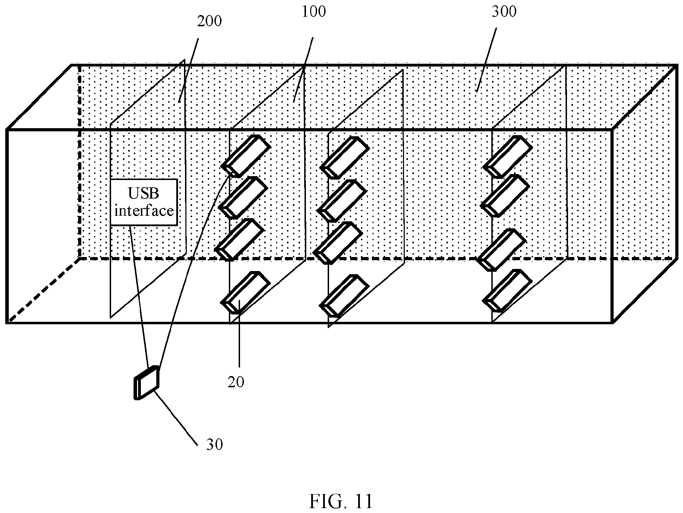

In yet another embodiment of this application, as shown in FIG. 11, the eye pattern determining chip 30 is a handheld apparatus, that is, independent of the board 100 and the main control board 200. During specific working, before service communication of the board 100 is performed, the eye pattern determining chip 30 sequentially determines impedance of a matching network of each driver unit on each board 100, so that an eye pattern curve of a laser signal that is output by an optical assembly that corresponds to each driver unit meets a preset standard.

Based on the foregoing embodiments, in an embodiment of this application, a retractable optical fiber is disposed at an input end of the eye pattern determining chip 30. The eye pattern determining chip 30 is sequentially connected to a to-be-adjusted optical assembly corresponding to each driver unit that is in each board by using the retractable optical fiber, and adjusts impedance of a matching network in a driver unit that corresponds to each to-be-adjusted optical assembly 20, so that an eye pattern curve of a laser signal that is output by each optical assembly 20 meets a preset standard.

In another embodiment of this application, an optical fiber flange interface is disposed at an input end of the eye pattern determining chip 30, and the optical fiber flange interface of the eye pattern determining chip 30 is connected to a to-be-adjusted optical assembly 20 corresponding to each driver unit that is in each board 100 by using an external optical fiber. In other words, during specific working, the optical fiber flange interface of the eye pattern determining chip 30 is sequentially connected to the to-be-adjusted optical assembly 20 and the driver unit that corresponds to the to-be-adjusted optical assembly 20 by using the external optical fiber, to adjust impedance of a matching network in a driver unit that corresponds to each to-be-adjusted optical assembly 20, so that an eye pattern curve of a laser signal that is output by each optical assembly 20 meets a preset standard.

It should be noted that, in this embodiment of this application, when the eye pattern determining chip 30 is a handheld apparatus, an optical fiber interface and an electrical interface are disposed in the eye pattern determining chip 30. The optical fiber interface is connected to the optical assembly 20 by using an optical fiber, and the electrical interface is connected to an electrical interface (a USB interface or another type of electrical interface) on the main control board 200 by using a USB cable or another electrical signal cable, to receive, by using the optical fiber, a laser signal output by the optical assembly 20, and transmit an adjustment instruction to the main control board by using the USB cable or the another electrical signal cable, to adjust the impedance of the matching network that corresponds to the optical assembly 20.

Optionally, in an embodiment of this application, the main control board is connected to each driver unit on each board by using a network. When adjusting impedance of a matching network of each driver unit, the main control board transmits an adjustment signal to the matching network by controlling conduction of a connection path between the main control board and a to-be-adjusted driver unit, to adjust the impedance of the matching network. However, this is not limited in this application, and is specifically determined based on a case.

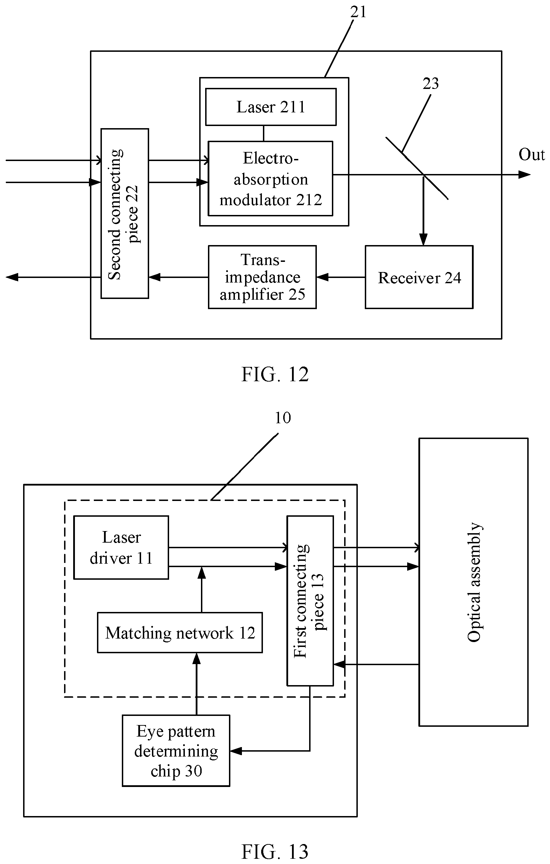

It can be learned from the foregoing descriptions that, according to the optical component apparatus provided in the embodiments of this application, the laser driver is disposed on the board, to reduce a size of the optical assembly, reduce power consumption of the optical assembly, and improve performance of the optical assembly. In addition, according to the optical component apparatus provided in the embodiments of this application, an eye pattern determining chip may be used to automatically adjust, based on a laser signal output by the optical assembly, impedance value of a matching network in a driver unit that is connected to the optical assembly, so that an eye pattern curve of an optical signal that is output by the optical assembly meets a preset standard. In addition, an embodiment of this application further provides an optical assembly. As shown in FIG. 12, the optical assembly includes an electro-absorption modulated laser 21 and a second connecting piece 22 that is connected to the electro-absorption modulated laser 21, and the second connecting piece 21 is configured to detachably electrically connect to an external assembly; the electro-absorption modulated laser 21 outputs a laser signal based on a modulation signal that is output by the external assembly; and
the optical assembly further includes:
an optical splitter 23, where the optical splitter 23 is configured to split, based on a split ratio of the optical splitter 23, an optical signal output by the electro-absorption modulated laser 21 into a first optical signal and a second optical signal;
a receiver 24, where the receiver 24 is configured to convert the second optical signal into a current signal;
a trans-impedance amplifier 25, where the trans-impedance amplifier 25 is configured to convert the current signal into a voltage signal, and output the voltage signal to the external assembly sequentially through the second connecting piece 22 and the first connecting piece 13; and
an output end Out, where the first optical signal is output through the output end Out.

The optical assembly provided in this embodiment of this application does not include a laser driver, so that a size of the optical assembly can be reduced, power consumption of the optical assembly can be reduced, and performance of the optical assembly can be improved. In addition, the optical assembly provided in this embodiment of this application includes the optical splitter, the receiver, and the trans-impedance amplifier, so that the second optical signal can be split from the laser signal output by the electro-absorption modulated laser. And the second optical signal is converted by the receiver and the trans-impedance amplifier and is output to the external assembly, so that an eye pattern determining chip in the external assembly adjusts, based on the second optical signal, impedance of a matching network in a driver unit that is in the external assembly and that corresponds to the optical assembly. Therefore, the impedance of the matching network in the driver unit that corresponds to the optical assembly matches the optical assembly, and further, an eye pattern curve of the first optical signal that is output by the optical assembly meets a preset standard. For specific details of the optical assembly provided in this embodiment of this application, refer to the foregoing embodiments. Details are not described herein again.

Correspondingly, an embodiment of this application further provides an optical component. As shown in FIG. 13, the optical component includes:
a board, where at least one driver unit 10 is disposed on the board, and the driver unit 10 includes: a laser driver 11, and a matching network 12 and a first connecting piece 13 that are connected to an output end of the laser driver 11; and the first connecting piece 13 is configured to detachably electrically connect to an external assembly (that is, an optical assembly), where
the laser driver 11 outputs a modulation signal B, and the modulation signal B is output to the external assembly through the first connecting piece 13; and
an eye pattern determining chip 30, where an output end of the eye pattern determining chip 30 is connected to the matching network 12, an input end of the eye pattern determining chip 30 is connected to the external assembly, and the eye pattern determining chip 30 receives a laser signal fed back by the external assembly based on the modulation signal B, and adjusts impedance of the matching network 12 based on the laser signal, until eye pattern performance of the laser signal that is fed back by the external assembly meets a preset standard.

It should be noted that, in the foregoing embodiment, the laser driver 11 also outputs a drive signal A, the drive signal A is input to the external assembly through the first connecting piece 13, and the external assembly works driven by the drive signal A. Based on the foregoing embodiment, in a specific embodiment of this application, the matching network 12 includes at least one of an adjustable resistor, an adjustable inductor, and an adjustable capacitor.

According to the optical component provided in this embodiment of this application, the laser driver and the matching network are disposed on the board, so that when the optical assembly is connected, the laser driver and the matching network may not be disposed in the optical assembly, thereby reducing a size of the optical assembly, reducing power consumption of the optical assembly, and improving performance of the optical assembly. In addition, according to the optical component provided in this embodiment of this application, the eye pattern determining chip may be used to automatically adjust, based on the laser signal output by the optical assembly, impedance value of a matching network in a driver unit that is connected to the optical assembly, so that an eye pattern curve of an optical signal that is output by the optical assembly meets the preset standard. For specific details of the optical component provided in this embodiment of this application, refer to the descriptions of the board, the eye pattern determining chip, and the like in the foregoing embodiments. Details are not described herein again.

In addition, an embodiment of this application further provides an optical line terminal and an optical network system. The optical line terminal includes the optical assembly provided in any one of the foregoing embodiments and the optical component provided in any one of the foregoing embodiments, or the optical line terminal includes the optical component apparatus provided in any one of the foregoing embodiments. The optical network system includes the optical line terminal and an optical network unit. Because a structure of the optical network unit is well known to a person skilled in the art, details are not described in this application.

According to the optical line terminal and the optical network system provided in this embodiment of this application, the laser driver and the matching network are disposed on the board, to reduce a size of the optical assembly, reduce power consumption of the optical assembly, and improve performance of the optical assembly. In addition, according to the optical line terminal and the optical network system provided in this embodiment of this application, an eye pattern determining chip may be used to automatically adjust, based on a laser signal output by the optical assembly, impedance value of a matching network in a driver unit that is connected to the optical assembly, so that an eye pattern curve of an optical signal that is output by the optical assembly meets a preset standard.

The parts in this specification are all described in a progressive manner, each part focuses on a difference from other parts, and for same or similar parts between the parts, refer to each other.

The embodiments disclosed above are described to enable a person skilled in the art to implement or use this application. Various modifications made to the embodiments will be obvious to a person skilled in the art, and the general principles defined in this specification may also be implemented in other embodiments without departing from the scope of this application, as defined by the appended claims. Therefore, this application is not limited to the embodiments shown in this specification, but shall fall within the widest scope consistent with the appended claims.

## Claims

1. An optical component apparatus, comprising:
a board (10), wherein the board comprises at least one driver unit disposed on the board (10), and the driver unit comprises: a laser driver (11), and a matching network (12) and a first connecting piece (13) that are connected to an output end of the laser driver (11);
at least one optical assembly (20), wherein the optical assembly comprises an electro-absorption modulated laser (21) and a second connecting piece (22) that is connected to the electro-absorption modulated laser, and the first connecting piece (13) and the second connecting piece (22) are detachably electrically connected, wherein
the laser driver (11) is configured to output a modulation signal, the modulation signal is input to the electro-absorption modulated laser (21) through the first connecting piece (13) and the second connecting piece (22), and the electro-absorption modulated laser (21) is configured to output a laser signal based on the modulation signal; and
an eye pattern determining chip (30), wherein the eye pattern determining chip (30) is configured to adjust an impedance of the matching network based on the laser signal output by the electro-absorption modulated laser (21), until eye pattern performance of the laser signal that is output by the electro-absorption modulated laser (21) meets a preset standard.

2. The optical component apparatus according to claim 1, wherein the first connecting piece (13) is a card connector, and the second connecting piece (22) is a plug or an edge connector, or the first connecting piece (13) is a plug or an edge connector, and the second connecting piece (22) is a card connector.

3. The optical component apparatus according to claim 1 or 2, wherein the eye pattern determining chip (30) is integrated on the board, one eye pattern determining chip (30) is correspondingly integrated into each driver unit, an input end of the eye pattern determining chip (30) is connected to the second connecting piece by using the first connecting piece (13), and an output end of the eye pattern determining chip (30) is connected to a matching network of the driver unit that corresponds to the eye pattern determining chip (30).

4. The optical component apparatus according to claim 3, wherein the optical assembly further comprises:
an optical splitter (23), wherein the optical splitter (23) is configured to split, based on a split ratio of the optical splitter, the laser signal output by the electro-absorption modulated laser (21) into a first optical signal and a second optical signal;
a receiver (24), wherein the receiver is configured to convert the second optical signal into a current signal;
a trans-impedance amplifier (25), wherein the trans-impedance amplifier is configured to convert the current signal into a voltage signal, and output the voltage signal to the eye pattern determining chip (30) sequentially through the second connecting piece and the first connecting piece; and
an output end, wherein the first optical signal is output through the output end.

5. The optical component apparatus according to claim 1 or 2, wherein a retractable optical fiber is disposed at an input end of the eye pattern determining chip (30), and the eye pattern determining chip (30) is connected to a to-be-adjusted optical assembly by using the retractable optical fiber.

6. The optical component apparatus according to claim 5, wherein the eye pattern determining chip (30) is integrated on the board, one eye pattern determining chip (30) is disposed on the board, and an output end of the eye pattern determining chip (30) is connected to a matching network of each driver unit on the board on which the output end is located.

7. The optical component apparatus according to claim 5, wherein the optical component apparatus further comprises a main control board, the eye pattern determining chip (30) is integrated on the main control board, and an output end of the eye pattern determining chip is connected to a matching network of each driver unit on each board on the main control board.

8. The optical component apparatus according to claim 1, wherein the eye pattern determining chip (30) is configured to generate an eye pattern curve based on the laser signal that is output by the electro-absorption modulated laser (21), and when the eye pattern curve does not meet the preset standard, the eye pattern determining chip (30) is configured to adjust the impedance of the matching network (12), until the eye pattern curve of the laser signal that is output by the electro-absorption modulated laser (21) meets the preset standard, and
wherein the eye pattern determining chip (30) is configured to adjust, when the eye pattern curve does not meet the preset standard, the impedance of the matching network (12) to one of a plurality of preset impedance values in sequence, until the eye pattern curve of the laser signal that is output by the electro-absorption modulated laser (21) meets the preset standard.

## Patentansprüche

1. Optische Komponenteneinrichtung, umfassend:
eine Platine (10), wobei die Platine mindestens eine auf der Platine (10) angeordnete Treibereinheit umfasst und die Treibereinheit umfasst: einen Lasertreiber (11) und ein Anpassungsnetzwerk (12) sowie ein erstes Verbindungsstück (13), die mit einem Ausgabeende des Lasertreibers (11) verbunden sind;
mindestens eine Optikbaugruppe (20), wobei die Optikbaugruppe einen elektroabsorptionsmodulierten Laser (21) und ein zweites Verbindungsstück (22) umfasst, das mit dem elektroabsorptionsmodulierten Laser verbunden ist, und wobei das erste Verbindungsstück (13) und das zweite Verbindungsstück (22) lösbar elektrisch verbunden sind, wobei
der Lasertreiber (11) ausgestaltet ist, um ein Modulationssignal auszugeben, das Modulationssignal in den elektroabsorptionsmodulierten Laser (21) durch das erste Verbindungsstück (13) und das zweite Verbindungsstück (22) eingegeben wird, und der elektroabsorptionsmodulierte Laser (21) ausgestaltet ist, um basierend auf dem Modulationssignal ein Lasersignal auszugeben; und
einen Augenmusterbestimmungschip (30), wobei der Augenmusterbestimmungschip (30) ausgestaltet ist, um eine Impedanz des Anpassungsnetzwerks basierend auf der Lasersignalausgabe durch den elektroabsorptionsmodulierten Laser (21) zu justieren, bis die Augenmusterleistungsfähigkeit des Lasersignals, das durch den elektroabsorptionsmodulierten Laser (21) ausgegeben wird, einen vorgegebenen Standard erfüllt.

2. Optische Komponenteneinrichtung nach Anspruch 1, wobei das erste Verbindungsstück (13) ein Kartenverbinder ist und das zweite Verbindungsstück (22) ein Steckverbinder oder Randverbinder ist, oder das erste Verbindungsstück (13) ein Steckverbinder oder Randverbinder ist und das zweite Verbindungsstück (22) ein Kartenverbinder ist.

3. Optische Komponenteneinrichtung nach Anspruch 1 oder 2, wobei der Augenmusterbestimmungschip (30) auf der Platine integriert ist, ein Augenmusterbestimmungschip (30) entsprechend in jede Treibereinheit integriert ist, ein Eingabeende des Augenmusterbestimmungschips (30) mit dem zweiten Verbindungsstück unter Verwendung des ersten Verbindungsstücks (13) verbunden ist, und ein Ausgabeende des Augenmusterbestimmungschips (30) mit einem Anpassungsnetzwerk der Treibereinheit verbunden ist, das dem Augenmusterbestimmungschip (30) entspricht.

4. Optische Komponenteneinrichtung nach Anspruch 3, wobei die Optikbaugruppe des Weiteren umfasst:
einen optischen Splitter (23), wobei der optische Splitter (23) ausgestaltet ist, um basierend auf einem Splitverhältnis des optischen Splitters das Lasersignal, das durch den elektroabsorptionsmodulierten Laser (21) ausgegeben wird, in ein erstes optisches Signal und ein zweites optisches Signal zu splitten;
einen Empfänger (24), wobei der Empfänger ausgestaltet ist, um das zweite optische Signal in ein Stromsignal zu konvertieren;
einen Transimpedanzverstärker (25), wobei der Transimpedanzverstärker ausgestaltet ist, um das Stromsignal in ein Spannungssignal zu konvertieren und das Spannungssignal an den Augenmusterbestimmungschip (30) sequentiell durch das zweite Verbindungsstück und das erste Verbindungsstück auszugeben; und
ein Ausgabeende, wobei das erste optische Signal durch das Ausgabeende ausgegeben wird.

5. Optische Komponenteneinrichtung nach Anspruch 1 oder 2, wobei eine einziehbare optische Faser an einem Eingabeende des Augenmustererkennungschips (30) angeordnet ist und der Augenmusterbestimmungschip (30) mit einer zu justierenden Optikbaugruppe unter Verwendung der einziehbaren optischen Faser verbunden ist.

6. Optische Komponenteneinrichtung nach Anspruch 5, wobei der Augenmusterbestimmungschip (30) auf der Platine integriert ist, ein Augenmusterbestimmungschip (30) auf der Platine angeordnet ist, und ein Ausgabeende des Augenmusterbestimmungschips (30) mit einem Anpassungsnetzwerk jeder Treibereinheit auf der Platine verbunden ist, auf der sich das Ausgabeende befindet.

7. Optische Komponenteneinrichtung nach Anspruch 5, wobei die optische Komponenteneinrichtung des Weiteren eine Hauptsteuerplatine umfasst, der Augenmusterbestimmungschip (30) auf der Hauptsteuerplatine integriert ist, und ein Ausgabeende des Augenmusterbestimmungschips mit einem Anpassungsnetzwerk jeder Treibereinheit auf jeder Platine auf der Hauptsteuerplatine verbunden ist.

8. Optische Komponenteneinrichtung nach Anspruch 1, wobei der Augenmusterbestimmungschip (30) ausgestaltet ist, um eine Augenmusterkurve basierend auf dem Lasersignal zu generieren, das durch den elektroabsorptionsmodulierten Laser (21) ausgegeben wird, und wenn die Augenmusterkurve den vorgegebenen Standard nicht erfüllt, der Augenmusterbestimmungschip (30) ausgestaltet ist, um die Impedanz des Anpassungsnetzwerks (12) zu justieren, bis die Augenmusterkurve des Lasersignals, das durch den elektroabsorptionsmodulierten Laser (21) ausgegeben wird, den vorgegebenen Standard erfüllt, und
wobei der Augenmusterbestimmungschip (30) ausgestaltet ist, um, wenn die Augenmusterkurve den vorgegebenen Standard nicht erfüllt, die Impedanz des Anpassungsnetzwerks (12) auf einen von einer Vielzahl von vorgegebenen Impedanzwerten in Folge zu justieren, bis die Augenmusterkurve des Lasersignals, das durch den elektroabsorptionsmodulierten Laser (21) ausgegeben wird, den vorgegebenen Standard erfüllt.

## Revendications

1. Appareil à composants optiques, comprenant :
une carte (10), dans lequel la carte comprend au moins une unité de pilote disposée sur la carte (10), et l'unité de pilote comprend : un pilote laser (11), et un réseau d'adaptation (12) et une première pièce de connexion (13) qui sont connectés à une extrémité de sortie du pilote laser (11) ;
au moins un ensemble optique (20), dans lequel l'ensemble optique comprend un laser à modulation par électroabsorption (21) et une seconde pièce de connexion (22) qui est connectée au laser à modulation par électroabsorption, et la première pièce de connexion (13) et la seconde pièce de connexion (22) sont connectées électriquement de manière détachable, dans lequel
le pilote laser (11) est configuré pour sortir un signal de modulation, le signal de modulation est entré dans le laser à modulation par électroabsorption (21) par le biais de la première pièce de connexion (13) et de la seconde pièce de connexion (22), et le laser à modulation par électroabsorption (21) est configuré pour sortir un signal laser sur la base du signal de modulation ; et
une puce de détermination de motif oculaire (30), dans lequel la puce de détermination de motif oculaire (30) est configurée pour ajuster une impédance du réseau d'adaptation sur la base du signal laser sorti par le laser à modulation par électroabsorption (21), jusqu'à ce que la réalisation de motif oculaire du signal laser qui est sorti par le laser à modulation par électroabsorption (21) réponde à une norme prédéfinie.

2. Appareil à composants optiques selon la revendication 1, dans lequel la première pièce de connexion (13) est un connecteur de carte, et la seconde pièce de connexion (22) est une fiche ou un connecteur périphérique, ou la première pièce de connexion (13) est une fiche ou un connecteur périphérique, et la seconde pièce de connexion (22) est un connecteur de carte.

3. Appareil à composants optiques selon la revendication 1 ou 2, dans lequel la puce de détermination de motif oculaire (30) est intégrée sur la carte, une puce de détermination de motif oculaire (30) est intégrée de manière correspondante dans chaque unité de pilote, une extrémité d'entrée de la puce de détermination de motif oculaire (30) est connectée à la seconde pièce de connexion à l'aide de la première pièce de connexion (13), et une extrémité de sortie de la puce de détermination de motif oculaire (30) est connectée à un réseau d'adaptation de l'unité de pilote qui correspond à la puce de détermination de motif oculaire (30).

4. Appareil à composants optiques selon la revendication 3, dans lequel l'ensemble optique comprend en outre :
un diviseur optique (23), dans lequel le diviseur optique (23) est configuré pour diviser, sur la base d'un rapport de division du diviseur optique, le signal laser sorti par le laser à modulation par électroabsorption (21) en un premier signal optique et un second signal optique ;
un récepteur (24), dans lequel le récepteur est configuré pour convertir le second signal optique en un signal de courant ;
un amplificateur à transimpédance (25), dans lequel l'amplificateur à transimpédance est configuré pour convertir le signal de courant en un signal de tension, et sortir le signal de tension vers la puce de détermination de motif oculaire (30) séquentiellement par le biais de la seconde pièce de connexion et de la première pièce de connexion ; et
une extrémité de sortie, dans lequel le premier signal optique est sorti par le biais de l'extrémité de sortie.

5. Appareil à composants optiques selon la revendication 1 ou 2, dans lequel une fibre optique rétractable est disposée à une extrémité d'entrée de la puce de détermination de motif oculaire (30), et la puce de détermination de motif oculaire (30) est connectée à un ensemble optique devant être ajusté à l'aide de la fibre optique rétractable.

6. Appareil à composants optiques selon la revendication 5, dans lequel la puce de détermination de motif oculaire (30) est intégrée sur la carte, une puce de détermination de motif oculaire (30) est disposée sur la carte, et une extrémité de sortie de la puce de détermination de motif oculaire (30) est connectée à un réseau d'adaptation de chaque unité de pilote sur la carte sur laquelle est située l'extrémité de sortie.

7. Appareil à composants optiques selon la revendication 5, l'appareil à composants optiques comprenant en outre une carte de commande principale, la puce de détermination de motif oculaire (30) étant intégrée sur la carte de commande principale, et une extrémité de sortie de la puce de détermination de motif oculaire étant connectée à un réseau d'adaptation de chaque unité de pilote sur chaque carte sur la carte de commande principale.

8. Appareil à composants optiques selon la revendication 1, dans lequel la puce de détermination de motif oculaire (30) est configurée pour générer une courbe de motif oculaire sur la base du signal laser qui est sorti par le laser à modulation par électroabsorption (21), et lorsque la courbe de motif oculaire ne répond pas à la norme prédéfinie, la puce de détermination de motif oculaire (30) est configurée pour ajuster l'impédance du réseau d'adaptation (12), jusqu'à ce que la courbe de motif oculaire du signal laser qui est sorti par le laser à modulation par électroabsorption (21) réponde à la norme prédéfinie, et
dans lequel la puce de détermination de motif oculaire (30) est configurée pour ajuster, lorsque la courbe de motif oculaire ne répond pas à la norme prédéfinie, l'impédance du réseau d'adaptation (12) sur une valeur d'une pluralité de valeurs d'impédance prédéfinies dans l'ordre, jusqu'à ce que la courbe de motif oculaire du signal laser qui est sorti par le laser à modulation par électroabsorption (21) réponde à la norme prédéfinie.
